# EUROPÄISCHE PATENTSCHRIFT

(11) **EP 2 786 009 B1**
(45) Veröffentlichungstag und Bekanntmachung des Hinweises auf die Patenterteilung: **18.05.2016**
(21) Anmeldenummer: 12778244.9
(22) Anmeldetag: 17.10.2012
(51) Int. Cl.: F02M 37/00, F16L 37/413, F16L 55/10

(54) **KUPPLUNG ZUM VERBINDEN ZWEIER FLUIDFÜHRENDER LEITUNGEN SOWIE ANTRIEBSEINRICHTUNG**
COUPLING FOR CONNECTING TWO FLUID-CONDUCTING LINES AND DRIVE DEVICE
ACCOUPLEMENT POUR RACCORDER DEUX CONDUITES GUIDANT DES FLUIDES AINSI QUE DISPOSITIF D'ENTRAÎNEMENT

(30) Priorität: 30.11.2011 DE 102011120345
(43) Veröffentlichungstag der Anmeldung: 08.10.2014
(73) Patentinhaber: Volkswagen AG, 38436 Wolfsburg (DE); Aft Automotive GmbH&Co. Kg, 48356 Nordwalde (DE)
(72) Erfinder: CELOVIC, Sevket, 38446 Wolfsburg (DE); RECH, Christian, 38442 Wolfsburg (DE); LAUMANN, Alfons, 38518 Gifhorn (DE); CICHOREK, Hermann, 37434 Gieboldehausen (DE); KRAMER, Dirk, 48329 Havixbeck OT Hohenholte (DE)
(74) Vertreter: Grosse, Rainer
(86) Internationale Anmeldenummer: PCT/EP2012/004336
(87) Internationale Veröffentlichungsnummer: WO 2013/079140

(56) Entgegenhaltungen:
- JP-U- 52 002 024
- US-A- 1 825 941
- US-A- 2 503 495
- US-A- 2 744 770
- US-A- 2 919 935
- US-A- 3 567 175
- US-A- 4 269 219
- US-A- 6 148 849
- US-A1- 2003 066 978
- US-A1- 2005 127 114

## Beschreibung

Die Erfindung betrifft eine Kupplung zum Verbinden zweier fluidführender Leitungen, wobei einer ersten der Leitungen ein erstes Kupplungsglied und einer zweiten der Leitungen ein zweites, mit dem ersten Kupplungsglied verbindbares Kupplungsglied zugeordnet ist. Die Erfindung betrifft weiterhin eine Antriebseinrichtung.

Kupplungen der eingangs genannten Art sind aus dem Stand der Technik bekannt, siehe z.B US 1 825 941 A, US 4 269 219 A oder US 2 503 495 A. Sie dienen dem Verbinden der beiden fluidführenden Leitungen. Die Kupplung besteht zumindest aus dem ersten Kupplungsglied und dem zweiten Kupplungsglied. Ersteres ist dabei einer der Leitungen und letzteres einer weiteren der Leitungen zugeordnet, also beispielsweise mit der jeweiligen Leitung verbunden, verbindbar oder einstückig mit ihr ausgebildet. Insbesondere wenn die Leitungen Bestandteil einer Antriebseinrichtung sind und dem Zuführen von Kraftstoff aus einem Kraftstofftank zu einem Antriebsaggregat eines Kraftfahrzeugs dienen, so können in den Leitungen Druckimpulse beziehungsweise Druckpulsationen auftreten, welche in Richtung des Kraftstofftanks gerichtet sind. Es ist jedoch grundsätzlich unerwünscht, dass das Fluid, also beispielsweise Kraftstoff, wieder in Richtung des Kraftstofftanks gelangt beziehungsweise der Kraftstofftank mit den Druckimpulsen beaufschlagt wird. Aus diesem Grund ist es bekannt, die Kupplung mit schwingungsdämpfenden Eigenschaften zu versehen.
Beispielsweise wird ein Pulsationsdämpfer in wenigstens einer der Leitungen angeordnet oder die Leitung aus druckimpulsdämpfenden beziehungsweise dämmenden Materialien ausgebildet. Diese Maßnahmen vergrößern jedoch den für die Leitungen notwendigen Bauraum erheblich oder sind kostenintensiv. Zudem kann es bei unbeabsichtigten Betriebszuständen der Kupplung, wie sie beispielsweise nach einem Unfall des Kraftfahrzeugs auftreten können, zu Problemen kommen. Beispielsweise kann Kraftstoff austreten und so das Entstehen eines Brands fördern. Aus diesem Grund müssen zusätzliche Sicherheitsmaßen ergriffen werden, welche den Bauraum weiter vergrößern und zudem kostenintensiv sind. Es ist beispielsweise bekannt, ein Crashblech zu verwenden.
Es ist daher Aufgabe der Erfindung, eine Kupplung vorzustellen, mit welcher die eingangs genannten Nachteile vermieden werden können und die insbesondere trotz geringem Bauraum eine effektive Dämpfung von Druckimpulsen ermöglicht. Zusätzlich soll für wenigstens eines der Kupplungsglieder verhindert werden, dass bei nichtverbundenen Kupplungsgliedern Fluid austreten kann.
Dies wird erfindungsgemäß mit einer Kupplung mit den Merkmalen des Anspruchs 1 erreicht.
Dabei ist vorgesehen, dass in der Kupplung ein Rückschlagventil und ein eine Strömungsverbindung durch wenigstens eines der beiden Kupplungsgliedern nur bei verbundenen Kupplungsgliedern freigebender Auslaufschutz vorgesehen sind.
Die Kupplung weist also ein Rückschlagventil auf. Durch das Rückschlagventil können die Druckimpulse beziehungsweise Druckpulsation, zumindest solche die der Hauptdurchströmungsrichtung der Kupplung entgegengerichtet sind, wenigstens teilweise, vorzugsweise vollständig, unterdrückt werden. Durch die Integration des Rückschlagventils in die Kupplung wird kein zusätzlicher Bauraum in Anspruch genommen, sodass eine Verwendung grundsätzlich auch bei beengten Platzverhältnissen möglich ist. Zusätzlich wird der Auslaufschutz realisiert, welcher bei nichtverbundenen Kupplungsgliedern verhindert, dass Fluid aus dem ersten und/oder zweiten Kupplungsglied in eine Umgebung der Kupplung austritt. Zu diesem Zweck soll die Strömungsverbindung durch wenigstens eines der beiden Kupplungsglieder nur dann freigegeben werden, wenn diese miteinander verbunden sind.
Die Erfindung betrifft insoweit auch eine Leitungsanordnung mit zwei fluidführenden Leitungen und einer Kupplung zum Verbinden der beiden Leitungen, wobei die Leitungen und die Kupplungsglieder wie vorstehend beschrieben ausgeführt sind. Die Kupplungsglieder können beispielsweise mit den Leitungen verbunden oder unmittelbar von diesen ausgebildet sein. Beispielsweise ist das erste Kupplungsglied mit der ersten der Leitungen fluidverbunden, während die zweite der Leitungen als Rohrleitung vorliegt und das Kupplungsglied unmittelbar ausbildet. Die Kupplung liegt insbesondere als Schnellkupplung, besonders bevorzugt als Steckkupplung, vor.

Erfindungsgemäß ist vorgesehen, dass das Rückschlagventil über ein Rückschlagventilelement und einen Rückschlagventilsitz verfügt, wobei das Rückschlagventilelement in dem ersten Kupplungsglied angeordnet und der Rückschlagventilsitz von dem zweiten Kupplungsglied ausgebildet ist. In dem ersten Kupplungsglied ist das Rückschlagventilelement angeordnet, das mit dem von dem zweiten Kupplungsglied ausgebildeten Rückschlagventilsitz zusammenwirkt und gemeinsam mit diesem das Rückschlagventil bildet. Das Rückschlagventil ist dabei derart ausgebildet, dass es erst in vollständiger Form vorliegt, wenn die beiden Kupplungsglieder der Kupplung miteinander verbunden sind. Zu diesem Zweck liegt in dem ersten Kupplungsglied das Rückschlagventilelement und in dem zweiten Kupplungsglied der Rückschlagventilsitz vor. Insbesondere wird der Rückschlagventilsitz von dem zweiten Kupplungsglied ausgebildet. Das bedeutet, dass das zweite Kupplungsglied unmittelbar als Rückschlagventilsitz dient beziehungsweise dieses aufweist, ohne dass zusätzliche Elemente an dem zweiten Kupplungsglied angeordnet sind. Das Rückschlagventil setzt sich insoweit aus dem Rückschlagventilelement und dem Rückschlagventilsitz zusammen und ist erst nach dem Zusammenfügen der beiden Kupplungsglieder funktionsfähig. Üblicherweise ist das Rückschlagventilelement in dem ersten Kupplungsglied verschieblich gelagert angeordnet, insbesondere in axialer Richtung. Es soll darauf hingewiesen werden, dass der Vorteil der Erfindung, nämlich die effektive Dämpfung von Druckimpulsen bei geringem Bauraum auch allein durch die spezielle Ausgestaltung des Rückschlagventils erreicht werden kann. Die Erfindung ist insoweit auch auf eine Kupplung zum Verbinden zweier fluidführender Leitungen gerichtet, wobei einer ersten der Leitungen ein erstes Kupplungsglied und einer zweiten der Leitungen ein zweites, mit dem ersten Kupplungsglied verbindbares Kupplungsglied zugeordnet ist. Dabei soll die Kupplung ein über ein Rückschlagventilelement und einen Rückschlagventilsitz verfügendes Rückschlagventil aufweisen, wobei das Rückschlagventilelement in dem ersten Kupplungsglied angeordnet und der Rückschlagventilsitz von dem zweiten Kupplungsglied ausgebildet ist. Gemäß den vorstehenden Ausführungen ist das Rückschlagventilelement üblicherweise in dem ersten Kupplungsglied verschieblich gelagert, um die Funktionsfähigkeit des Rückschlagventils sicherzustellen.

Eine Weiterbildung der Erfindung sieht vor, dass das mit dem Rückschlagventilsitz zusammenwirkende Rückschlagventilelement bei verbundenen Kupplungsgliedern in einer ersten Stellung und bei unverbundenen Kupplungsgliedern in einer zweiten Stellung vorliegt, wobei der Rückschlagventilsitz das Ventilelement in die erste Stellung drängt. Das Rückschlagventilelement ist entsprechend bezüglich des ersten Kupplungsglieds verlagerbar und kann zumindest in der ersten und der zweiten Stellung vorliegen. Vor einem Verbinden der beiden Kupplungsglieder miteinander liegt das Ventilelement in der zweiten Stellung vor. Das erste und das zweite Kupplungsglied werden beispielsweise in axialer Richtung zusammengefügt, wobei das zweite Kupplungsglied in das erste Kupplungsglied eingreift. Dabei gerät der Rückschlagventilsitz in Berührkontakt mit dem Ventilelement, sodass bei einem weiteren Aufeinanderzuverlagern der beiden Kupplungsglieder der Rückschlagventilsitz das Rückschlagventilelement in das erste Kupplungsglied hinein und damit in Richtung der ersten Stellung drängt. Die erste Stellung liegt demnach in axialer Richtung gesehen weiter von einer dem zweiten Kupplungsglied zugewandten Mündung des ersten Kupplungsglieds entfernt als die erste Stellung. Vorzugsweise ist es vorgesehen, dass bei einem Voneinandertrennen der beiden Kupplungsglieder das Ventilelement wieder in die zweite Stellung zurückgelangt. Das Rückschlagventilelement wird insbesondere bei vollständig verbundenen Kupplungsgliedern in die erste Stellung gedrängt. Sind die Kupplungsglieder noch nicht vollständig miteinander verbunden, so kann das Rückschlagventilelement auch noch in der zweiten oder zwischen der ersten und der zweiten Stellung vorliegen.

Eine Weiterbildung der Erfindung sieht vor, dass das Rückschlagventilelement in dem ersten Kupplungsglied, insbesondere in einem in dem ersten Kupplungsglied angeordneten Einschubteil, in axialer Richtung verlagerbar angeordnet ist. Die erste und die zweite Stellung sind insofern in axialer Richtung voneinander beabstandet, sodass das Rückschlagventil wenigstens die beiden Stellungen einnehmen kann. Zu diesem Zweck ist es in dem ersten Kupplungsglied in axialer Richtung beweglich gelagert. Ein entsprechendes Lager des Rückschlagventilelements kann unmittelbar an dem ersten Kupplungsglied vorgesehen sein. Besonders bevorzugt ist jedoch ein zusätzliches Einschubteil vorgesehen, welches in dem ersten Kupplungsglied angeordnet ist und welches das Lager für das Rückschlagventilelement aufweist. Prinzipiell kann das Einschubteil beliebig an dem ersten Kupplungsglied befestigt sein. Besonders bevorzugt ist jedoch eine Befestigung durch Formschluss und/oder Kraftschluss, wobei das Einschubteil in letzterem Fall bevorzugt in das erste Kupplungsglied beziehungsweise eine in diesem vorliegende Ausnehmung eingepresst ist. Zu diesem Zweck weist das Einschubteil beispielsweise in radialer Richtung gesehen Außenabmessungen auf, welche größer sind als Innenabmessungen des ersten Kupplungsglieds beziehungsweise der Ausnehmung. Alternativ kann auch eine stoffschlüssige Verbindung vorgesehen sein.

Eine Weiterbildung der Erfindung sieht vor, dass das Rückschlagventilelement zur Ausbildung des Auslaufschutzes eine Strömungsverbindung durch das erste Kupplungsglied in der ersten Stellung freigibt und in der zweiten Stellung durch Zusammenwirken mit einem weiteren Rückschlagventilsitz verschließt. Mittels des Rückschlagventilelements sind insoweit in der Kupplung zwei Rückschlagventile ausgebildet. Das erste Rückschlagventil - bestehend aus dem vorstehend beschriebenen, ersten Rückschlagventilsitz und dem Rückschlagventilelement - ist funktionsfähig, wenn die beiden Kupplungsglieder miteinander verbunden sind, sodass der Rückschlagventilsitz des zweiten Kupplungsglieds das Rückschlagventilelement in die erste Stellung drängt. In dieser ersten Stellung wird die Strömungsverbindung durch das erste Kupplungsglied freigegeben, indem das Rückschlagventilelement derart angeordnet wird, dass es nicht mit dem weiteren Rückschlagventilsitz zusammenwirkt, sondern dass vielmehr ein entsprechendes Dichtelement des Rückschlagventilelements beabstandet zu diesem weiteren Rückschlagventilsitz angeordnet ist. Allerdings kann selbstverständlich, auch wenn sich das Rückschlagventilelement in der ersten Stellung befindet, das von diesem gemeinsam mit dem ersten Rückschlagventilsitz ausgebildeten Rückschlagventil ein Durchströmen der Kupplung verhindern, wenn diese - beispielsweise verursacht durch die Druckimpulse - entgegen der Hauptdurchströmungsrichtung erfolgt.

In der zweiten Stellung verschließt dagegen das Rückschlagventilelement durch Zusammenwirken mit dem weiteren Rückschlagventilsitz das erste Kupplungsglied. Die zweite Stellung liegt, wie vorstehend bereits beschrieben, vor, wenn die beiden Kupplungsglieder unverbunden sind und das Rückschlagventilelement nicht von dem Rückschlagventilsitz in die erste Stellung gedrängt ist. Das bedeutet, dass, solange die beiden Kupplungsglieder der Kupplung nicht miteinander verbunden sind, die Strömungsverbindung durch das erste Kupplungsglied unterbrochen ist, sodass eventuell in dem ersten Kupplungsglied beziehungsweise der ersten der Leitungen vorhandenes Fluid nicht durch das erste Kupplungsglied austreten kann. Dabei kann es vorgesehen sein, dass das Einschubteil den weiteren Rückschlagventilsitz aufweist oder ausbildet. Alternativ kann der weitere Rückschlagventilsitz selbstverständlich auch von dem ersten Kupplungsglied ausgebildet oder zumindest mit ausgebildet sein.

Eine Weiterbildung der Erfindung sieht vor, dass der in dem ersten Kupplungsglied vorliegende Fluiddruck das Rückschlagventilelement in der ersten Stellung in Richtung des Rückschlagventilsitzes und/oder in der zweiten Stellung in Richtung des weiteren Rückschlagventilsitzes drängt. Das Kupplungsglied und die Rückschlagventilsitze sind insoweit derart angeordnet, dass sie miteinander in Dichtkontakt gebracht werden, sobald der in dem ersten Kupplungsglied vorliegende Fluiddruck den in dem zweiten Kupplungsglied vorliegenden Fluiddruck (abzüglich einer eventuellen Federkraft eines Federelements, welche auf das Rückschlagventilelement wirkt) übersteigt. Wirkt das Rückschlagventil also mit dem Rückschlagventilsitz oder dem weiteren Rückschlagventilsitz zusammen, so soll der in dem ersten Kupplungsglied vorliegende Fluiddruck nicht zu einem Freigeben des jeweiligen Rückschlagventilsitzes führen können, sondern vielmehr das Rückschlagventilelement weiter in Richtung des Rückschlagventilsitzes beziehungsweise des weiteren Rückschlagventilsitzes drängen. Auf diese Weise ist ein zuverlässiges Abdichten gegeben, insbesondere bei Vorliegen einer Strömung entgegen der Hauptströmungsrichtung der Kupplung.

Eine Weiterbildung der Erfindung sieht vor, dass das Rückschlagventilelement zwei in axialer Richtung voneinander beabstandete Dichtelemente aufweist, wobei das erste der Dichtelemente in der ersten Stellung mit dem Rückschlagventilsitz und das zweite der Dichtelemente in der zweiten Stellung mit dem weiteren Rückschlagventilsitz zusammenwirkt. Die beiden Dichtelemente und auch die Rückschlagventilsitze sind in axialer Richtung zueinander versetzt. Dabei sind sie derart zueinander angeordnet, dass das zweite der Dichtelemente den weiteren Rückschlagventilsitz permanent freigibt, sobald das Rückschlagventilelement in der ersten Stellung vorliegt, jedoch wieder mit diesem in Dichtverbindung tritt, wenn das Rückschlagelement in die zweite Stellung zurückverlagert wird. Die Dichtelemente können materialeinheitlich oder materialuneinheitlich zu dem Rückschlagventilelement ausgebildet sind. In letzterem Fall ist das Rückschlagventilelement beispielsweise in einem Zweikomponenten-Spritzgießverfahren hergestellt. Vorzugsweise liegt das erste der Dichtelemente als ebene Dichtfläche und das zweite der Dichtelemente als Ringdichtung vor, welche das Rückschlagventilelement in Umfangsrichtung vollständig umgreift. Das erste der Dichtelemente ist dabei beispielsweise auf einer in radialer Richtung verlaufenden Fläche des Rückschlagventilelements angeordnet. Insbesondere ist bei der hier beschriebenen Ausführungsform vorgesehen, dass das erste der Dichtelemente ausschließlich in der ersten Stellung mit dem Rückschlagventilsitz und das zweite der Dichtelemente ausschließlich in der zweiten Stellung mit dem weiteren Rückschlagventilsitz zusammenwirkt

Eine Weiterbildung der Erfindung sieht ein Federelement vor, welches das Rückschlagventilelement in Richtung der zweiten Stellung und/oder des Rückschlagventilsitzes drängt. Das Federelement dient also dazu, das Rückschlagventilelement zum Verschließen des Rückschlagventilsitzes oder des weiteren Rückschlagventilsitzes anzuordnen, wenn in dem ersten Kupplungsglied kein entsprechender Fluiddruck vorliegt beziehungsweise die Druckdifferenz zwischen dem ersten und dem zweiten Kupplungsglied nicht ausreicht, um das Rückschlagventilelement zu verlagern. Bedingt durch das Federelement muss demnach zum Freigeben des Rückschlagventilsitzes und damit zum Durchströmen des Rückschlagventils der Fluiddruck in dem zweiten Kupplungsglied größer sein als der Fluiddruck in dem ersten Kupplungsglied zuzüglich dem aus der Federkraft des Federelements resultierenden Druck. Wird das erste Kupplungsglied von dem zweiten Kupplungsglied entfernt, so drängt das Federelement das Rückschlagventilelement in Richtung der zweiten Stellung, sodass es mit dem weiteren Rückschlagventilsitz zum Verschließen des ersten Kupplungsglieds zusammenwirken kann.

Eine Weiterbildung der Erfindung sieht vor, dass der weitere Rückschlagventilsitz an einem Radialvorsprung ausgebildet ist, an welchem sich auf der dem weiteren Rückschlagventilsitz in axialer Richtung abgewandten Seite das Federelement abstützt. Der Radialvorsprung erstreckt sich vorzugsweise in radialer Richtung nach innen hin zu dem Rückschlagventilelement, welches durch eine von dem Radialvorsprung definierte zentrale Ausnehmung verläuft. Auf der einen Seite des Radialvorsprungs (in axialer Richtung gesehen) liegt nun das Federelement an, welches das Rückschlagventilelement in Richtung der zweiten Stellung beziehungsweise des Rückschlagventilsitzes drängt. Auf der anderen Seite ist der weitere Rückschlagventilsitz ausgebildet.

Eine Weiterbildung der Erfindung sieht vor, dass das Rückschlagventil eine in der ersten Stellung das erste Kupplungsglied und das zweite Kupplungsglied fluidtechnisch verbindende Drosselöffnung aufweist. Die Drosselöffnung ist dazu vorgesehen, bei miteinander verbundenen Kupplungsgliedern eine Strömungsverbindung zwischen dem ersten Kupplungsglied und dem zweiten Kupplungsglied auch dann herzustellen, wenn das Rückschlagventil geschlossen ist und das Rückschlagventilelement mit dem Rückschlagventilsitz zusammenwirkt. Die Drosselöffnung ermöglicht somit eine Fluidströmung aus dem ersten Kupplungsglied in das zweite Kupplungsglied, also in Sperrrichtung des Rückschlagventils. Die Drosselöffnung weist jedoch einen im Vergleich zu dem (freigegebenen) Rückschlagventilsitz geringeren Querschnitt auf, sodass das Fluid lediglich mit einem kleinen Durchsatz die Drosselöffnung passieren kann. Befindet sich das Rückschlagventilelement dagegen in der zweiten Stellung, so ist die Drosselöffnung verschlossen.

Die Erfindung betrifft weiterhin eine Antriebseinrichtung mit wenigstens zwei fluidführenden Leitungen und einer Kupplung, insbesondere gemäß den vorstehenden Ausführungen, wobei eine erste der Leitungen mit einem Antriebsaggregat fluidverbunden und eine zweite der Leitungen an einen Kraftstofftank angeschlossen ist, wobei der ersten der Leitungen ein erstes Kupplungsglied und der zweiten der Leitungen ein zweites, mit dem ersten Kupplungsglied verbindbares Kupplungsglied zugeordnet ist. Dabei ist vorgesehen, dass die Kupplung ein über ein Rückschlagventilelement und einen Rückschlagventilsitz verfügendes Rückschlagventil aufweist, wobei das Rückschlagventilelement in dem ersten Kupplungsglied angeordnet und der Rückschlagventilsitz von dem zweiten Kupplungsglied ausgebildet ist. Die eingangs beschriebenen Druckimpulse beziehungsweise Druckpulsationen treten besonders häufig auf, wenn die Leitungen der Antriebseinrichtung zugeordnet sind und beispielsweise dem Zuführen von Kraftstoff aus einem Kraftstofftank zu einer Kraftstoffpumpe, insbesondere einer Hochdruckkraftstoffpumpe, des Antriebsaggregats dienen. Aus diesem Grund soll die Kupplung das Rückschlagventil aufweisen, welches wenigstens zweiteilig ausgebildet ist und aus dem Rückschlagventilelement und dem Rückschlagventilsitz besteht. Die Kupplung kann gemäß den vorstehenden Ausführungen weitergebildet sein.
Die Erfindung wird nachfolgend anhand der in der Zeichnung dargestellten Ausführungsbeispiele näher erläutert, ohne dass eine Beschränkung der Erfindung erfolgt. Dabei zeigen:
- Figur 1: einen Längsschnitt durch eine Leitungsanordnung mit einer Kupplung in einer ersten, erfindungsgemäßen Ausführungsform, welche wenigstens ein Rückschlagventil aufweist,
- Figur 2: eine schematische Darstellung des Funktionsprinzips der Kupplung, wobei sich ein Rückschlagventilelement des Rückschlagventils in einer ersten Stellung befindet und mit einem Rückschlagventilsitz dichtend zusammenwirkt,
- Figur 3: eine schematische Darstellung des aus der Figur 2 bekannten Funktionsprinzips, wobei das Rückschlagventilelement in axialer Richtung über die erste Stellung zum Freigeben des Rückschlagventilsitzes durch das Rückschlagventilelement hinaus verlagert ist,
- Figur 4: das aus den Figuren 2 und 3 bekannte Funktionsprinzip, wobei sich das Rückschlagventilelement in der ersten Stellung befindet und ein Fluidstrom durch eine Drosselöffnung vorliegt,
- Figur 5: die bekannte schematische Darstellung des Funktionsprinzips, wobei das Rückschlagventilelement in einer zweiten Stellung vorliegt und so eine Strömungsverbindung durch das erste Kupplungsglied freigibt,
- Figur 6: eine schematische Darstellung des Rückschlagventils in einer ersten Ausführungsvariante,
- Figur 7: das Rückschlagventil in einer zweiten Ausführungsvariante,
- Figur 8: das Rückschlagventil in einer dritten Ausführungsvariante,
- Figur 9: einen Längsschnitt durch die Leitungsanordnung mit der Kupplung gemäß einer zweiten, nicht erfindungsgemäßen Ausführungsform, wobei sich das Rückschlagventilelement in der ersten Stellung befindet, und
- Figur 10: die Leitungsanordnung mit der aus der Figur 9 bekannten Ausführungsform der Kupplung, wobei sich das Rückschlagventilelement in der zweiten Stellung befindet.

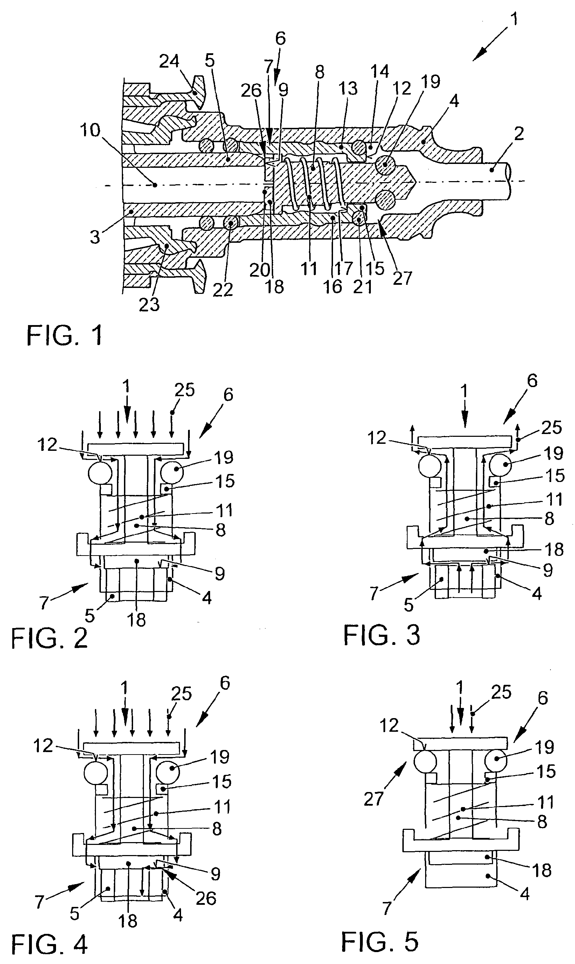

Die Figur 1 zeigt eine Leitungsanordnung 1 mit einer ersten Leitung 2 und einer zweiten Leitung 3. Die erste Leitung 2 ist mit einem ersten Kupplungsglied 4 strömungstechnisch verbunden, während ein zweites Kupplungsglied 5 von der zweiten Leitung 3 selbst ausgebildet wird. Die beiden Kupplungsglieder 4 und 5 sind Bestandteil einer Kupplung 6. Die Leitungsanordnung 1 ist beispielsweise Bestandteil einer hier nicht näher dargestellten Antriebseinrichtung mit einem Antriebsaggregat und einem Kraftstofftank. Die erste Leitung 2 ist dabei beispielsweise an das Antriebsaggregat und die zweite Leitung 3 an den Kraftstofftank angeschlossen, wobei eine Kraftstoffpumpe, insbesondere eine Hochdruckkraftstoffpumpe, auf Seiten des Antriebsaggregats, also zwischen dem ersten Kupplungsglied 4 und dem Antriebsaggregat vorliegt. Das Antriebsaggregat ist beispielsweise als Brennkraftmaschine ausgebildet.

Durch den Betrieb der Kraftstoffpumpe beziehungsweise Hochdruckkraftstoffpumpe entstehen Druckimpulse beziehungsweise Druckpulsationen, welche sich durch die Leitungsanordnung 1 in Richtung des Kraftstofftanks fortsetzen. Weil die Beeinflussung des Kraftstofftanks durch derartige Druckimpulse unerwünscht ist, werden häufig so genannten Pulsationsdämpfer in wenigstens einer der Leitungen 2 und 3 der Leitungsanordnung 1 angeordnet. Dies ist jedoch insbesondere aus Bauraumgründen zwar grundsätzlich unerwünscht, kann jedoch zusätzlich bei der nachstehend beschriebenen Ausführungsform vorgesehen sein, um die Dämpfungswirkung weiter zu erhöhen. Bei der hier beschriebenen Ausführungsform wird die Dämpfung mittels eines in die Kupplung 6 integriertes Rückschlagventil 7 erzielt. Dieses Rückschlagventil 7 verhindert analog zu dem Pulsationsdämpfer das Fortpflanzen der Druckimpulse aus der ersten Leitung 2 in die zweite Leitung 3 durch die Kupplung 6 hindurch, indem bei Auftreten eines Druckimpulses der Durchströmungsquerschnitt zwischen einem Rückschlagventilelement 8 und einem Rückschlagventilsitz 9 verkleinert wird.

Das Rückschlagventilelement 8 ist dabei in dem ersten Kupplungsglied 4 in axialer Richtung (bezüglich einer Längsachse 10 der Kupplung 6) verlagerbar. Der Rückschlagventilsitz 9 wird von dem zweiten Kupplungsglied 5 ausgebildet. In dem vorliegenden Fall stellt ein freies Ende des zweiten Kupplungsglieds 5 oder wenigstens ein Bereich des freien Endes den Rückschlagventilsitz 9 dar. Durch diese Ausgestaltung liegt erst nach dem Verbinden der beiden Kupplungsglieder 4 und 5 miteinander das Rückschlagventil 7 in funktionsfähiger Form vor. In der Figur 1 ist das Rückschlagventilelement 8 in einer ersten Stellung gezeigt, in welche es bei dem Verbinden der Kupplungsglieder 4 und 5 miteinander von dem Rückschlagventilsitz 9 gedrängt wird. Der von dem Rückschlagventilsitz 9 beziehungsweise dem zweiten Kupplungsglied 5 in Richtung der ersten Leitung 2 gerichteten Kraft auf das Rückschlagventilelement 8 wirkt eine von einem Federelement 11 erzeugte Federkraft entgegen. Das Federelement 11 drängt das Rückschlagventilelement 8 in Richtung einer zweiten Stellung, welche vorliegt, wenn die beiden Kupplungsglieder 4 und 5 nicht miteinander verbunden sind. Die zweite Stellung ist gegenüber der ersten Stellung in Richtung des zweiten Kupplungsglieds 5 beziehungsweise der zweiten Leitung 3 versetzt angeordnet.

In der zweiten Stellung des Rückschlagventilelements 8 wirkt dieses mit einem weiteren Rückschlagventilsitz 12 zusammen. Der weitere Rückschlagventilsitz 12 liegt beispielsweise an einem Einschubteil 13 vor, welches in einer Ausnehmung 14 des ersten Kupplungsglieds 4 angeordnet ist. Alternativ kann selbstverständlich der weitere Rückschlagventilsitz 12 auch von dem ersten Kupplungsglied 4 selbst ausgebildet sein. Zur Ausbildung des weiteren Rückschlagventilsitzes 12 weist das Einschubteil 13 in dem vorliegenden Ausführungsbeispiel einen Radialvorsprung 15 auf, welcher sich ausgehend von einem Hauptkörper 16 des Einschubteils 13 in radialer Richtung nach innen in Richtung des das Einschubteil 13 durchgreifenden Rückschlagventilelements 8 erstreckt. Auf der dem weiteren Rückschlagventilsitz 12 abgewandten Seite des Radialvorsprungs 15 liegt eine Auflagefläche 17 vor, auf welcher sich das Federelement 11 zur Erzeugung der Federkraft abstützt. Der ringförmige Bereich zwischen dem Einschubteil 13 und dem Rückschlagventilelement 8 stellt einen (einzigen) Durchströmungsquerschnitt des Rückschlagventils 7 beziehungsweise eine Strömungsverbindung durch das erste Kupplungsglied 4 dar. Ist dieser Durchströmungsquerschnitt beziehungsweise die Strömungsverbindung mittels des Rückschlagventilelements 8 in dessen zweiter Stellung versperrt, so kann in dem ersten Kupplungsglied 4 und/oder in der ersten Leitung 2 vorliegendes Fluid nicht durch den Durchströmungsquerschnitt hindurch und somit in eine Umgebung des ersten Kupplungsglied 4 gelangen.

Das Rückschlagventilelement 8 verfügt über den Rückschlagventilsitzen 9 und 12 zugeordnete Dichtelemente 18 und 19. Das Dichtelement 18 des Rückschlagventilelements 8, welches mit dem Rückschlagventilsitz 9 zusammenwirken kann, liegt beispielsweise als ebene Dichtfläche auf einer Stirnseite des Rückschlagventilelements 8 vor und überdeckt eine Mündung 20 des zweiten Kupplungsglieds 5. Das zweite Dichtelement 19 liegt dagegen als Ringdichtung vor, welche das Rückschlagventilelement 8 in Umfangsrichtung vollständig umgreift. Das Einschubteil 13 ist derart angeordnet, dass nach dem Verbinden der Kupplungsglieder 4 und 5 miteinander das zweite Kupplungsglied 5 wenigstens bereichsweise in das Einschubteil 13 beziehungsweise eine zentrale Ausnehmung des Einschubteils 13 eingreift. Das Einschubteil 13 verfügt über Dichtungen 21 und 22, welche eine dichte Verbindung zu dem ersten Kupplungsglied 4 (Dichtung 21) und zu dem zweiten Kupplungsglied 5 (Dichtung 22) herstellen können.

Die Kupplung 6 verfügt beispielsweise über Halteelemente 23, welche die Kupplungsglieder 4 und 5 nach dem Verbinden in Bezug zueinander wenigstens teilweise festsetzen und so eine dauerhafte Verbindung bis zum Betätigen eines oder mehrerer Bedienelemente 24 sicherstellen. Dabei ist die Kupplung 6 als Steckkupplung, insbesondere als Schnellkupplung ausgeführt. Bevorzugt ist zum Öffnen der Kupplung 6 und damit dem Lösen der Kupplungsglieder 4 und 5 voneinander ein gleichzeitiges Betätigen von wenigstens zwei der Bedienelemente 24 und ein vorheriges Aufeinanderzuverlagern der Kupplungsglieder 4 und 5 notwendig.

Bei der Kupplung 6 in der hier vorgestellten Ausführungsform ist es vorgesehen, dass das Rückschlagventilelement 8 beziehungsweise seine Dichtelemente 19 mit dem weiteren Rückschlagventilsitz 12 zusammenwirken und somit - wie beschrieben - die Strömungsverbindung durch das erste Kupplungsglied 4 unterbrechen, solange die Kupplungsglieder 4 und 5 nicht miteinander verbunden sind und daher das Rückschlagventilelement 8 in seiner zweiten Stellung vorliegt. Werden die Kupplungsglieder 4 und 5 miteinander verbunden, so greift das zweite Kupplungsglied 5 in das erste Kupplungsglied 4 beziehungsweise das Einschubteil 13 ein und gerät in Berührkontakt mit dem Rückschlagventilelement 8 beziehungsweise dessen Dichtelement 18. Wird das Kupplungsglied 5 weiter in das Kupplungsglied 4 hineinverlagert, so drängt der Rückschlagventilsitz 9 das Rückschlagventilelement 8 in Richtung der ersten Stellung. Das bedeutet, dass das Rückschlagventilelement 8 beziehungsweise sein Dichtelement 19 nicht mehr mit dem weiteren Rückschlagventilsitz 12 zum Unterbrechen der Strömungsverbindung zusammenwirkt, sondern dass vielmehr nun das Rückschlagventilelement 8 dichtend an dem Rückschlagventilsitz 9 anliegt.

Soll nun Fluid aus dem zweiten Kupplungsglied 5 in Richtung des ersten Kupplungsglieds 4 gefördert werden, so muss in dem zweiten Kupplungsglied 5 ein ausreichend hoher Fluiddruck aufgebaut werden. Der Fluiddruck muss dabei den in dem ersten Kupplungsglied 4 vorliegenden Fluiddruck zuzüglich einem von der Federkraft des Federelements 11 verursachten Druck überwinden, damit das Rückschlagventilelement 8 in von der zweiten Stellung abgewandter Richtung über die erste Stellung hinaus derart verlagert wird, sodass das Fluid das Rückschlagventil 7 beziehungsweise den Rückschlagventilsitz 9 durchströmen kann. Auf diese Weise ist zum einen durch das Rückschlagventil 7 der eingangs erwähnte Pulsationsdämpfer realisiert und zum anderen kann bei getrennten Kupplungsgliedern 4 und 5 eventuell in dem ersten Kupplungsglied 4 vorliegendes Fluid nicht aus diesem austreten. Insoweit ist durch das Rückschlagventilelement 8 und dem weiteren Rückschlagventilsitz 12 ein weiteres Rückschlagventil beziehungsweise eine Auslaufsicherung realisiert.

Die Figur 2 zeigt eine schematische Darstellung einer weiteren Ausführungsform der Kupplung 6. Dabei ist diese grundsätzlich aufgebaut wie die vorstehend anhand der Figur 1 beschriebene, sodass auf die vorstehenden Ausführungen verwiesen sei. Dargestellt ist das Rückschlagventilelement 8 in der ersten Stellung. Dabei liegt, beispielsweise aufgrund eines Druckimpulses in der ersten Leitung 2, zumindest vorübergehend eine Strömung (Pfeile 25) in Richtung des zweiten Kupplungsglieds 5 vor. Weil die Kupplungsglieder 4 und 5 miteinander verbunden sind, das zweite Kupplungsglied 5 also in das erste Kupplungsglied 4 eingreift und das Rückschlagventilelement 8 in Richtung der ersten Stellung drängt, wirkt das Rückschlagventilelement 8 nicht mit dem weiteren Rückschlagventilsitz 12 zum Verschließen der Strömungsverbindung durch das erste Kupplungsglied 4 zusammen. Stattdessen kann die Strömung bis hin zu dem Rückschlagventilsitz 9 strömen, der von dem zweiten Kupplungsglied 5 ausgebildet ist. Das von Rückschlagventilelement 8 und Rückschlagventilsitz 9 ausgebildete Rückschlagventil 7 ist nun dazu ausgebildet, bei einer Strömung in diese Richtung zu schließen beziehungsweise gar nicht erst zu öffnen. Aus diesem Grund liegt das Dichtelement 18 an dem Rückschlagventilsitz 9 derart an, dass das Fluid nicht in das zweite Kupplungsglied 5 hineinströmen kann. Entsprechend wird der Druckimpuls wenigstens teilweise unterbunden.

Die Figur 3 zeigt die aus der Figur 2 bekannte schematische Darstellung, wobei jedoch das Fluid aus dem zweiten Kupplungsglied 5 in Richtung des ersten Kupplungsglieds 4 strömt. Das Fluid bewirkt demnach auf das Rückschlagventilelement 8 eine Kraft entsprechend der Druckdifferenz des Fluids in dem zweiten Kupplungsglied 5 zum dem Fluid in dem ersten Kupplungsglied 4, welche der von dem Federelement 11 bewirkten Kraft entgegenwirkt. Übersteigt sie letztere, so wird das Rückschlagventilelement 8 über die erste Stellung hinaus zum Freigeben der Strömungsverbindung zwischen dem ersten Kupplungsglied 4 und dem zweiten Kupplungsglied 5 verlagert. Dies ist in der Figur 3 gezeigt.

Die Figur 4 zeigt wiederum die aus der Figur 2 bekannte Stellung des Rückschlagventilelements 8. In der hier dargestellten Ausführungsform weist die Kupplung 6 beziehungsweise das Rückschlagventil 7 jedoch eine Drosselöffnung 26 auf, welche auch bei geschlossenem Rückschlagventil 7, also bei in der ersten Stellung befindlichen Rückschlagventilelement 8, eine Durchströmung der Kupplung 6 von dem ersten Kupplungsglied 4 in Richtung des zweiten Kupplungsglieds 5 ermöglicht. Auf diese Weise wird ein Überdruck bei einem Stillstand des Antriebsaggregats, insbesondere in der Brennkraftmaschine, abgebaut.

Die Figur 5 zeigt die bereits bekannte schematische Darstellung der Kupplung 6, wobei sich das Rückschlagventilelement 8 in einer zweiten Stellung befindet, in welche es von dem Federelement 11 gedrängt wird, weil die Kupplungsglieder 4 und 5 nicht miteinander verbunden sind. Das zweite Kupplungsglied 5 greift demnach nicht in das erste Kupplungsglied 4 ein, um das Rückschlagventilelement 8 in Richtung der ersten Stellung zu drängen. In der zweiten Stellung ist das Rückschlagventilelement 8 derart angeordnet, dass es mit dem weiteren Rückschlagventilsitz 12 zum Unterbrechen der Strömungsverbindung durch das erste Kupplungsglied 4 zusammenwirkt. Eventuell in der ersten Leitung 2 beziehungsweise dem ersten Kupplungsglied 4 vorhandenes Fluid kann also nicht aus diesen herausgelangen, wenn die Kupplungsglieder 4 und 5 voneinander getrennt sind. Dies ist insbesondere vor einer Montage des Antriebsaggregats der Fall, weil es erst nachfolgend beziehungsweise während der Montage mittels der Kupplung 6 an weitere Bereiche eines Kraftstoffsystems, insbesondere den Kraftstofftank, angeschlossen wird. Die hier vorgestellte Kupplung 6 dient demnach sowohl dem zumindest teilweisen Unterdrücken von Druckpulsationen als auch dem Erzielen eines Auslaufschutzes 27, der verhindert, dass das Fluid, insbesondere Kraftstoff, aus dem ersten Kupplungsglied 4 in eine Umgebung der Kupplung 6 gelangen kann. In der zweiten Stellung des Rückschlagventilelements 8 ist auch die Drosselöffnung 26 stets verschlossen, so dass das Fluid nicht durch sie in die Umgebung der Kupplung 6 gelangen kann.

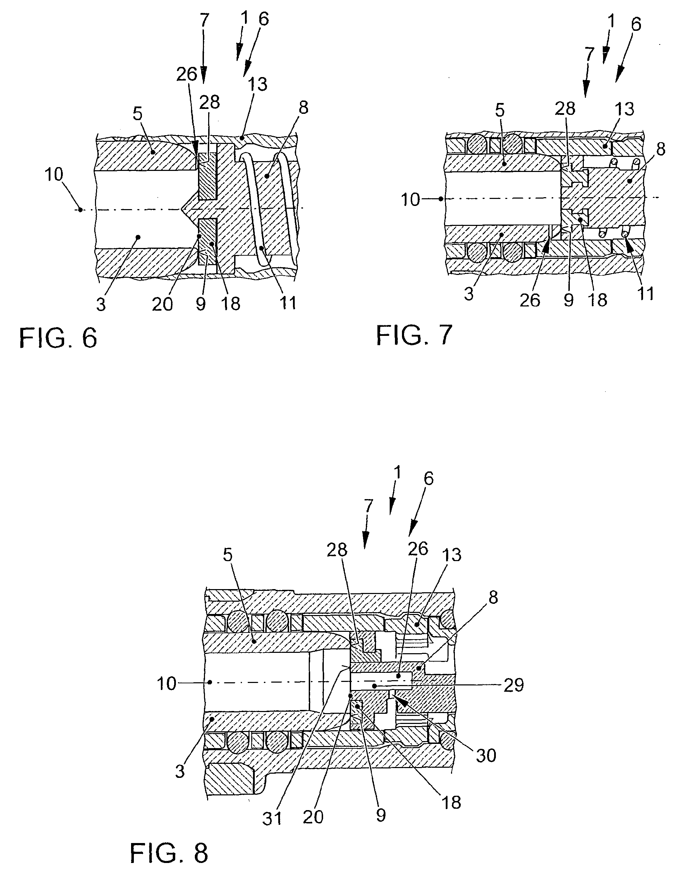

Die Figur 6 zeigt die aus den vorhergehenden Figuren bekannte Leitungsanordnung 1, sodass insoweit auf die vorstehenden Ausführungen verwiesen sei. Die Drosselöffnung 26 liegt hier in einer ersten Ausführungsvariante vor, in welcher auf einer Stirnseite 28 des zweiten Kupplungsglieds 5 beziehungsweise in dem Rückschlagventilsitz 9 Radialausnehmungen, insbesondere Einkerbungen, ausgebildet sind, welche auch bei geschlossenem Rückschlagventil 7 eine Durchströmung der Kupplung 6 aus dem ersten Kupplungsglied 4 in das zweite Kupplungsglied 5 zulassen.
Die Figur 7 zeigt eine weitere Ausführungsvariante der Drosselöffnung 26. Bei dieser ist die Drosselöffnung 26 als Bohrung in dem zweiten Kupplungsglied 5 vorgesehen, welche in radialer Richtung verläuft. Auch hier kann so bei geschlossenem Rückschlagventil 7, also wenn das Dichtelement 18 auf dem Rückschlagventilsitz 9 aufliegt, eine Durchströmung von dem ersten Kupplungsglied 4 in das zweite Kupplungsglied 5 (und umgekehrt) erfolgen.
Die Figur 8 zeigt eine dritte Ausführungsvariante der Drosselöffnung 26. Hier liegt die Drosselöffnung 26 nicht an oder in dem zweiten Kupplungsglied 5 vor, wie dies für die anhand der Figuren 6 und 7 beschriebenen Ausführungsvarianten der Fall ist. Vielmehr soll sie in dem Rückschlagventilelement 8 ausgebildet sein. Zu diesem Zweck sind beispielsweise eine Axialbohrung 29 und eine Radialbohrung 30 vorgesehen, wobei die Axialbohrung 29 eine Stirnseite 31 des Rückschlagventilelements 8 durchgreift und permanent mit dem zweiten Kupplungsglied 5 strömungsverbunden ist. Über die Radialbohrung 30, welche im Wesentlichen die eigentliche Drosselung bewirkt, ist die Axialbohrung 29 permanent mit dem ersten Kupplungsglied 4 strömungsverbunden. Entsprechend kann durch die Axialbohrung 29 und die Radialbohrung 30 permanent Fluid zwischen den Kupplungsgliedern 4 und 5 strömen, auch wenn das Rückschlagventil 7 geschlossen ist.

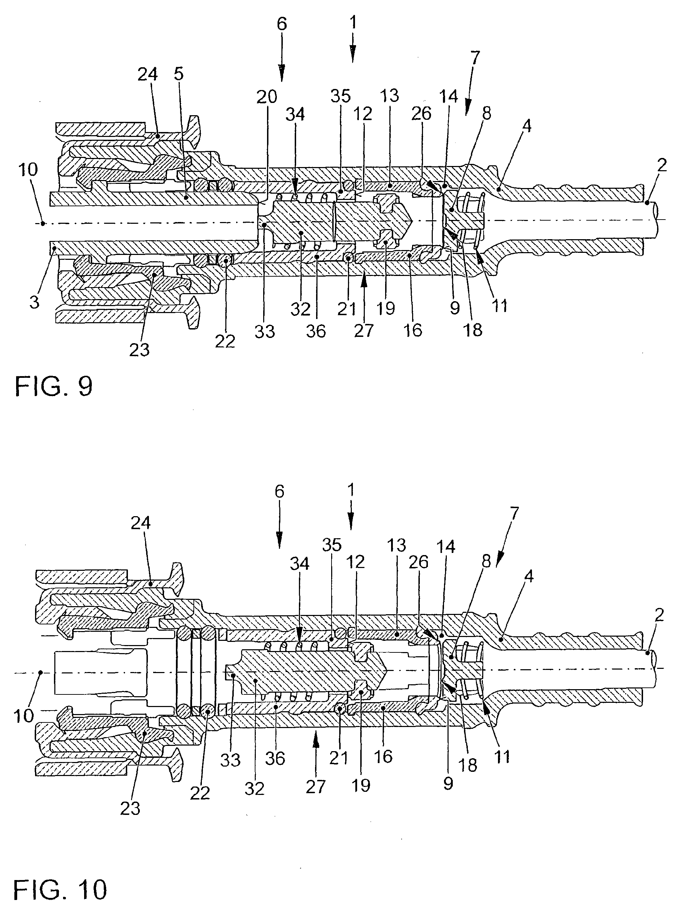

Die Figur 9 zeigt die Leitungsanordnung 1 mit einer Kupplung 6 in einer zweiten, nicht erfindungsgemäßen Ausführungsform. Grundsätzlich soll auf die vorstehenden Ausführungen verwiesen sein. Insbesondere die anhand der Figuren 6 bis 8 beschriebenen Ausführungsvarianten der Drosselöffnung 26 sind in analoger Weise auf die Leitungsanordnung 1 gemäß den Figuren 9 und 10 anwendbar. Im Gegensatz zu der anhand der Figuren 1 bis 5 beschriebenen Ausführungsform der Leitungsanordnung 1 sind bei der hier dargestellten Ausführungsform das Rückschlagventil 7 und der Auslaufschutz 27 nicht an einem gemeinsamen Rückschlagventilelement 8 ausgebildet. Vielmehr weist das Rückschlagventil 7 das mittels des Federelements 11 federkraftbeaufschlagte Rückschlagventilelement 8 und den Rückschlagventilsitz 9 auf. Der Rückschlagventilsitz 9 liegt an dem Einschubteil 13 vor. Der Auslaufschutz 27 verfügt dagegen über ein eigenes Ventilelement 32, an welchem das Dichtelement 19 vorliegt. Das Dichtelement 19 kann mit dem Rückschlagventilsitz 12 zusammenwirken, wenn die Kupplungsglieder 4 und 5 nicht miteinander verbunden sind. In der Figur 9 liegt das Ventilelement 32 in seiner ersten Stellung vor, in welche es durch das zweite Kupplungsglied 5 gedrängt ist. Das Ventilelement 32 weist zu diesem Zweck einen Radialsteg 33 auf, welcher derart vorliegt, dass zwar das Ventilelement 32 von dem zweiten Kupplungsglied 5 in Richtung des ersten Kupplungsglieds 4 gedrängt wird, wenn die Kupplungsglieder 4 und 5 miteinander verbunden werden, jedoch eine Fluidströmung durch die Mündung 20 nicht verhindert. Das Ventilelement 32 ist von einem Federelement 34 federkraftbeaufschlagt, welches das Ventilelement 32 in Richtung des zweiten Kupplungsglieds 5 drängt. Das Federelement 34 stützt sich dabei an einem Radialvorsprung 35 ab, welcher von einem Einschubteil 36, welches analog zu dem Einschubteil 13 in dem ersten Kupplungsglied 4 vorliegt, ab. Die Einschubteile 13 und 36 können auch als gemeinsames Einschubteil, also einstückig und materialeinheitlich, ausgebildet sein.

Die Figur 10 zeigt die Leitungsanordnung 1 mit der aus der Figur 9 bekannten zweiten Ausführungsform der Kupplung 6 in der zweiten Stellung. Dabei sind die Kupplungsglieder 4 und 5 nicht miteinander verbunden, die Figur 10 zeigt insoweit lediglich das erste Kupplungsglied 4. Weil das zweite Kupplungsglied 5 nun das Ventilelement 32 nicht in die erste Stellung drängt, liegt es in der zweiten Stellung vor, in welcher das Dichtelement 19 mit dem Rückschlagventilsitz 12 dichtend zusammenwirkt. Insoweit ist die Strömungsverbindung durch das erste Kupplungsglied 4 unterbrochen. Auf diese Weise ist der Auslaufschutz 27 realisiert.

## Patentansprüche

1. Kupplung (6) zum Verbinden zweier fluidführender Leitungen (2,3), wobei einer ersten der Leitungen (2) ein erstes Kupplungsglied (4) und einer zweiten der Leitungen (3) ein zweites, mit dem ersten Kupplungsglied (4) verbindbares Kupplungsglied (5) zugeordnet ist, wobei in der Kupplung (6) ein Rückschlagventil (7) und ein eine Strömungsverbindung durch wenigstens eines der beiden Kupplungsglieder (4,5) nur bei verbundenen Kupplungsgliedern (4,5) freigebender Auslaufschutz (27) vorgesehen sind, **dadurch gekennzeichnet, dass** das Rückschlagventil (7) über ein Rückschlagventilelement (8) und einen Rückschlagventilsitz (9) verfügt, wobei das Rückschlagventilelement (8) in dem ersten Kupplungsglied (4) angeordnet und der Rückschlagventilsitz (9) von dem zweiten Kupplungsglied (5) ausgebildet ist.

2. Kupplung nach Anspruch 1, **dadurch gekennzeichnet, dass** das mit dem Rückschlagventilsitz (9) zusammenwirkende Rückschlagventilelement (8) bei verbundenen Kupplungsgliedern (4,5) in einer ersten Stellung und bei unverbundenen Kupplungsgliedern (4,5) in einer zweiten Stellung vorliegt, wobei der Rückschlagventilsitz (9) das Rückschlagventilelement (8) in die erste Stellung drängt.

3. Kupplung nach einem der vorhergehenden Ansprüche, **dadurch gekennzeichnet, dass** das Rückschlagventilelement (8) in dem ersten Kupplungsglied (4), insbesondere in einem in dem ersten Kupplungsglied (4) angeordneten Einschubteil (13), in axialer Richtung verlagerbar angeordnet ist.

4. Kupplung nach einem der vorhergehenden Ansprüche, **dadurch gekennzeichnet, dass** das Rückschlagventilelement (8) eine Strömungsverbindung durch das erste Kupplungsglied (4) in der ersten Stellung freigibt und in der zweiten Stellung durch Zusammenwirken mit einem weiteren Rückschlagventilsitz (12) verschließt.

5. Kupplung nach Anspruch 4, **dadurch gekennzeichnet, dass** der in dem ersten Kupplungsglied (4) vorliegende Fluiddruck das Rückschlagventilelement (8) in der ersten Stellung in Richtung des Rückschlagventilsitzes (9) und/oder in der zweiten Stellung in Richtung des weiteren Rückschlagventilsitzes (12) drängt.

6. Kupplung nach einem der Ansprüche 4 und 5, **dadurch gekennzeichnet, dass** das Rückschlagventilelement (8) zwei in axialer Richtung voneinander beabstandete Dichtelemente (18,19) aufweist, wobei das erste der Dichtelemente (18) in der ersten Stellung mit dem Rückschlagventilsitz (9) und das zweite der Dichtelemente (19) in der zweiten Stellung mit dem weiteren Rückschlagventilsitz (12) zusammenwirkt.

7. Kupplung nach einem der vorhergehenden Ansprüche, **gekennzeichnet durch** ein Federelement (11), welches das Rückschlagventilelement (8) in Richtung der zweiten Stellung und/oder des Rückschlagventilsitzes (9) drängt.

8. Kupplung nach einem der Ansprüche 4 bis 7, **dadurch gekennzeichnet, dass** der weitere Rückschlagventilsitz (9) an einem Radialvorsprung (15) ausgebildet ist, an welchem sich auf der dem weiteren Rückschlagventilsitz (12) in axialer Richtung abgewandten Seite das Federelement (11) abstützt.

9. Kupplung nach einem der vorhergehenden Ansprüche, **dadurch gekennzeichnet, dass** das Rückschlagventil (7) eine in der ersten Stellung das erste Kupplungsglied (4) und das zweite Kupplungsglied (5) fluidtechnische verbindende Drosselöffnung (26) aufweist.

10. Antriebseinrichtung mit wenigstens zwei fluidführenden Leitungen (2,3) und einer Kupplung (6) nach einem oder mehreren der vorhergehenden Ansprüche, wobei eine erste der Leitungen (2) mit einem Antriebsaggregat fluidverbunden und eine zweite der Leitungen (3) an einen Kraftstofftank angeschlossen ist, und wobei der ersten der Leitungen ein erstes Kupplungsglied (4) und der zweiten der Leitungen (3) ein zweites, mit dem ersten Kupplungsglied (4) verbindbares Kupplungsglied (5) zugeordnet ist, wobei in der Kupplung (6) ein Rückschlagventil (7) und ein eine Strömungsverbindung durch wenigstens eines der beiden Kupplungsglieder (4,5) nur bei verbundenen Kupplungsgliedern (4,5) freigebender Auslaufschutz (27) vorgesehen sind, **dadurch gekennzeichnet, dass** das Rückschlagventil (7) über ein Rückschlagventilelement (8) und einen Rückschlagventilsitz (9) verfügt, wobei das Rückschlagventilelement (8) in dem ersten Kupplungsglied (4) angeordnet und der Rückschlagventilsitz (9) von dem zweiten Kupplungsglied (5) ausgebildet ist.

## Claims

1. Coupling (6) for connecting two fluid-conducting lines (2, 3), wherein a first one of the lines (2) is associated with a first coupling member (4) and a second one of the lines (3) is associated with a second coupling member (5) that is connectable to the first coupling member (4), wherein a check valve (7) and a leakage protection (27) are provided in the coupling (6), the leakage protection (27) releasing a flow connection through at least one of the coupling members (4, 5) only when the coupling members (4, 5) are connected, **characterised in that** the check valve (7) has a check valve element (8) and a check valve seat (9), the check valve element (8) being arranged in the first coupling member (4) and the check valve seat (9) being formed by the second coupling member (5).

2. Coupling according to claim 1, **characterised in that** the check valve element (8) cooperating with the check valve seat (9) is in a first position when the coupling members (4, 5) are connected, and in a second position when the coupling members (4, 5) are not connected, wherein the check valve seat (9) urges the check valve element (8) into the first position.

3. Coupling according to any one of the preceding claims, **characterised in that** the check valve element (8) is arranged in the first coupling member (4), in particular in an insertion part (13) arranged in the first coupling member (4), in a manner displaceable in the axial direction.

4. Coupling according to any one of the preceding claims, **characterised in that** the check valve element (8) in the first position enables a flow connection through the first coupling member (4), and in the second position closes it off by cooperating with another check valve seat (12).

5. Coupling according to claim 4, **characterised in that** the fluid pressure present in the first coupling member (4) urges the check valve element (8) in the first position into the direction of the check valve seat (9) and/or in the second position into the direction of the other check valve seat (12).

6. Coupling according to any one of claims 4 and 5, **characterised in that** the check valve element (8) has two sealing elements (18, 19) spaced apart from each other in the axial direction, wherein the first one of the sealing elements (18) cooperates with the check valve seat (9) in the first position, and the second one of the sealing elements (19) cooperates with the other check valve seat (12) in the second position.

7. Coupling according to any one of the preceding claims, **characterised by** a spring member (11) that urges the check valve element (8) into the direction of the second position and/or of the check valve seat (9).

8. Coupling according to any one of claims 4 to 7, **characterised in that** the other check valve seat (9) is formed on a radial protrusion (15), on which the spring element (11) rests on the side facing away from the other check valve seat (12) in the radial direction.

9. Coupling according to any one of the preceding claims, **characterised in that** the check valve (7) has a throttle opening (26) that fluidically couples the first coupling member (4) and the second coupling member (5) in the first position.

10. Driving device having at least two fluid-conducting lines (2, 3) and a coupling (6) according to one or more of the preceding claims, wherein a first one of the lines (2) is fluidically connected to a driving unit, and a second one of the lines (3) is connected to a fuel tank, and wherein the first one of the lines is associated with a first coupling member (4) and the second one of the lines (3) is associated with a second coupling member (5) that is connectable to the first coupling member (4), wherein a check valve (7) and a leakage protection (27) are provided in the coupling (6), the leakage protection (27) releasing a flow connection through at least one of the coupling members (4, 5) only when the coupling members (4, 5) are connected, **characterised in that** the check valve (7) has a check valve element (8) and a check valve seat (9), the check valve element (8) being arranged in the first coupling member (4) and the check valve seat (9) being formed by the second coupling member (5).

## Revendications

1. Accouplement (6) pour relier deux conduites (2, 3) guidant des fluides, une première des conduites (2) étant associée à un premier élément d'accouplement (4), et une seconde des conduites (3) étant associée à un second élément d'accouplement (5) qui peut être relié au premier élément d'accouplement (4), dans l'accouplement (6) étant prévus une soupape anti-retour (7) et une protection anti-fuite (27) qui libère une connexion fluidique à travers au moins un des deux éléments d'accouplement (4, 5) seulement si les éléments d'accouplement (4, 5) sont reliés, **caractérisé en ce que** la soupape anti-retour (7) dispose d'un élément de soupape anti-retour (8) et un siège de soupape anti-retour (9), l'élément de soupape anti-retour (8) étant disposé dans le premier élément d'accouplement (4), et le siège de soupape anti-retour (9) étant formé par le second élément d'accouplement (5).

2. Accouplement selon la revendication 1, **caractérisé en ce que** l'élément de soupape anti-retour (8) coopérant avec le siège de soupape anti-retour (9) est dans une première position si les éléments d'accouplement (4, 5) sont reliés, et dans une seconde position, si les éléments d'accouplement (4, 5) ne sont pas reliés, dans lequel le siège de soupape anti-retour (9) pousse l'élément de soupape anti-retour (8) dans la première position.

3. Accouplement selon l'une quelconque des revendications précédentes, **caractérisé en ce que** l'élément de soupape anti-retour (8) est disposé, de telle manière qu'il peut être déplacé dans la direction axiale, dans le premier élément d'accouplement (4), notamment dans une pièce d'insertion (13) disposée dans le premier élément d'accouplement (4).

4. Accouplement selon l'une quelconque des revendications précédentes, **caractérisé en ce que** l'élément de soupape anti-retour (8) libère une connexion fluidique à travers le premier élément d'accouplement (4) dans la première position, et, dans la seconde position, ferme la connexion par coopération avec un autre siège de soupape anti-retour (12).

5. Accouplement selon la revendication 4, **caractérisé en ce que** la pression de fluide présente dans le premier élément d'accouplement (4) pousse l'élément de soupape anti-retour (8) vers la direction du siège de soupape anti-retour (9) dans la première position, et/ou vers la direction de l'autre siège de soupape anti-retour (12) dans la seconde position.

6. Accouplement selon l'une quelconque des revendications 4 et 5, **caractérisé en ce que** l'élément de soupape anti-retour (8) présente deux éléments d'étanchéité (18,19) espacés l'un de l'autre dans la direction axiale, le premier des éléments d'étanchéité (18) coopérant avec le siège de soupape anti-retour (9) dans la première position, et le second des éléments d'étanchéité (19) coopérant avec l'autre siège de soupape anti-retour (12) dans la seconde position.

7. Accouplement selon l'une quelconque des revendications précédentes, **caractérisé par** un élément de ressort (11) qui pousse l'élément de soupape anti-retour (8) dans la direction de la seconde position et/ou du siège de soupape anti-retour (9).

8. Accouplement selon l'une quelconque des revendications 4 à 7, **caractérisé en ce que** l'autre siège de soupape anti-retour (9) est formé au niveau d'une saillie radiale (15) sur laquelle s'appuie, sur le côté opposé à l'autre siège de soupape anti-retour (12) dans la direction axiale, l'élément de ressort (11).

9. Accouplement selon l'une quelconque des revendications précédentes, **caractérisée en ce que** la soupape anti-retour (7) comprend une ouverture d'étranglement (26) qui relie, dans la première position, le premier élément d'accouplement (4) et le second élément d'accouplement (5) de manière fluidique.

10. Dispositif d'entraînement avec au moins deux conduites (2,3) guidant des fluides et un accouplement (6) selon l'une ou plusieurs des revendications précédentes, dans lequel une première des conduites (2) est reliée de manière fluidique avec un groupe d'entraînement, et une seconde des conduites (3) est raccordée à un réservoir de carburant, et dans lequel la première des conduites est associée à un premier élément d'accouplement (4), et la seconde des conduites (3) est associée à un second élément d'accouplement (5) qui peut être relié au premier élément d'accouplement (4), dans l'accouplement (6) étant prévus une soupape anti-retour (7) et une protection anti-fuite (27) qui libère une connexion fluidique à travers au moins un des deux éléments d'accouplement (4, 5) seulement si les éléments d'accouplement (4, 5) sont reliés, **caractérisé en ce que** la soupape anti-retour (7) dispose d'un élément de soupape anti-retour (8) et un siège de soupape anti-retour (9), l'élément de soupape anti-retour (8) étant disposé dans le premier élément d'accouplement (4), et le siège de soupape anti-retour (9) étant formé par le second élément d'accouplement (5).
